(19) Europäisches Patentamt
European Patent Office
Office européen des brevets

(11) Numéro de publication: **0 379 815 A1**

(12) **DEMANDE DE BREVET EUROPEEN**

(21) Numéro de dépôt: **89403497.4**

(22) Date de dépôt: **15.12.89**

(51) Int. Cl.[5]: **C08G 77/62, C08J 3/24, C08B 35/00, C04B 35/58**

(30) Priorité: **23.12.88 FR 8817066**

(43) Date de publication de la demande: **01.08.90 Bulletin 90/31**

(84) Etats contractants désignés: **AT BE CH DE ES FR GB GR IT LI LU NL SE**

(71) Demandeur: **RHONE POULENC CHIMIE**
**25 Quai Paul Doumer**
**F-92408 Courbevoie Cédex(FR)**

(72) Inventeur: **Lebrun, Jean-Jacques**
**Cent Hosp. de Lyon Sud Chemin du Grand Revoyet**
**F-69310 Pierre Bénite(FR)**
Inventeur: **Bobichon, Charles**
**1, rue de l'Angile**
**F-69005 Lyon(FR)**

(74) Mandataire: **Esson, Jean-Pierre et al**
**RHONE-POULENC CHIMIE Service Brevets Chimie 25, quai Paul Doumer**
**F-92408 Courbevoie Cedex(FR)**

(54) **Procédé de réticulation de polysilazanes.**

(57) L'invention a trait à un procédé de réticulation de polysilazanes qui est caractérisé par le fait qu'il consiste à mettre en contact lesdits polysilazanes avec une quantité efficace d'au moins un composé comprenant au moins deux groupements fonctionnels du type -N=C=O.

Les polysilazanes ainsi réticulés peuvent alors servir à la préparation de produits céramiques à base de SiC et/ou $Si_3N_4$.

EP 0 379 815 A1

Xerox Copy Centre

# PROCEDE DE RETICULATION DE POLYSILAZANES

La présente invention a trait à un procédé de réticulation de polysilazanes.

Elle concerne également, à titre d'application, l'utilisation des polysilazanes ainsi réticulés pour la préparation de matériaux céramiques à base de carbure et/ou nitrure de silicium.

L'idée de préparer des produits céramiques, chargés ou non, à base de carbure et/ou nitrure de silicium par décomposition thermique de composes précurseurs du type polysilazane, notamment organopolysilazane ou organopoly(disilyl) silazane, n'est pas nouvelle et, à ce jour, de nombreux articles et brevets ont été publiés sur le sujet.

Les organopolysilazanes et les organopoly(disilyl)silazanes dénommés par la suite polysilazanes sont des produits bien connus se présentant sous forme de monomères, d'oligomères et de polymères cycliques ou linéaires et également sous la forme de polymères résineux. Ces polysilazanes peuvent être préparés suivant une large variété de procédés à partir d'une gamme étendue de produits de départ.

L'intérêt d'une telle voie polymère réside surtout dans les possibilités de mise en forme de ce type de produits, et plus particulièrement pour l'obtention, après pyrolyse, d'articles céramiques en $Si_3N_4$, SiC, SiNC, ou leurs mélanges, sous forme de fibres ou de revêtements plus ou moins minces.

En fait, la mise en oeuvre des polysilazanes sous la forme de fibres constitue probablement un de leurs avantages principaux.

Selon un schéma désormais classique, des polysilazanes (après ramollissement éventuel s'ils sont initialement à l'état solide) sont filés en fibres continues par tout moyen connu en soi, notamment par extrusion à travers des filières, ces fibres sont ensuite traitées dans le but notamment d'améliorer leur tenue thermique et/ou mécanique, puis pyrolysées pour donner finalement les fibres en céramique désirées.

Le traitement de la fibre préalablement à sa pyrolyse, appelé souvent indifféremment traitement de durcissement, d'infusibilité ou bien encore de réticulation, constitue une étape essentielle de tout procédé visant à la préparation de fibres céramiques par une voie polymères silazanes.

A ce jour, le durcissement des fibres polysilazanes fait appel soit à des méthodes physiques (irradiations) soit à des méthodes thermochimiques.

Les méthodes physiques présentent l'inconvénient majeur d'être de mise en oeuvre délicate et onéreuse, et la seule voie retenue actuellement industriellement est le durcissement thermochimique au moyen d'un traitement sous un mélange air/vapeurs d'eau.

Cependant, un tel traitement a pour inconvénient sérieux d'introduire des quantités importantes d'oxygène dans la fibre céramique, ce qui peut se traduire par une altération sensible des performances d'ensemble de ladite fibre, notamment de certaines de ses propriétés thermomécaniques comme par exemple sa résistance à la rupture.

La présente invention a donc pour but de résoudre le problème ci-dessus et de proposer un moyen de traitement chimique simple, efficace, économique et de mise en oeuvre aisée qui, en obviant aux inconvénients des procédés de l'art antérieur, permette d'aboutir sous des formes les plus diverses (fils, fibres, pellicules, revêtements, pièces massives, etc...) à des polysilazanes substantiellement infusibles qui, lors de leur pyrolyse, donnent avec de bons rendements pondéraux des produits céramiques à base de $Si_3N_4$ et/ou SiC présentant d'excellentes propriétés.

On a maintenant trouvé que ce but, et d'autres, peuvent être atteints au moyen de la présente invention qui concerne en effet un procédé de réticulation de polysilazanes, et qui est caractérisé par le fait qu'il consiste à mettre en contact lesdits polysilazanes avec une quantité efficace d'au moins un composé comprenant au moins deux groupements fonctionnels du type $-N=C=O$.

La Demanderesse a pu constater que, de façon totalement inattendue et surprenante, un tel traitement, dont les modalités pratiques de mise en oeuvre seront définies plus en détails ci-après permet d'aboutir à des polysilazanes présentant une structure particulièrement réticulée qui leur confère de bonnes propriétés d'infusibilité et d'insolubilité.

Mais d'autres caractéristiques, aspects et avantages de l'invention apparaîtront encore plus clairement à la lecture de la description qui va suivre, et des exemples concrets, mais non limitatifs, relatifs à sa mise en oeuvre.

Les organopolysilazanes de départ susceptibles d'être réticulés selon un procédé conforme à l'invention, sont des produits bien connus en soi et aisés à préparer ; on peut utiliser notamment n'importe quel produit de réaction entre : (a) au moins un organohalogénosilane de formule (I):

$R_aX_{4-a}Si$ (I)

dans laquelle X désigne un halogène et les radicaux R, identiques ou différents, sont choisis parmi

l'hydrogène, un radical alkyle linéaire ou ramifié éventuellement halogéne, un radical cycloalkyle, un radical aryle tel que le radical phényle et naphtyle, un radical arylalkyle ou alkylaryle, un radical alcényle tel que le radical vinyle ou allyle, un radical alcynyle tel le radical éthynyle ou propynyle, et l'indice a étant égal à 0, 1, 2 ou 3, et (b) un composé organique ou organosilylé comportant au moins un groupement $NH_2$ ou NH comme par exemple l'ammoniac, les amines primaires ou secondaires, les silylamines, les amides, les hydrazines, les hydrazides, etc...

Dans la formule (I), comme exemples de radicaux R alkyle, on peut citer les radicaux méthyle, éthyle, propyle, butyle, pentyle, hexyle, heptyle et octyle ; R cycloalkyl : on peut citer les radicaux cyclopentyle, cyclohexyle et cycloheptyle ; R arylalkyle : les radicaux benzyle, phénylethyle ; R alkylaryle : les radicaux tolyle et xylyle.

A titre d'exemple, comme organohalogénosilane utilisable seul ou en mélange, on peut citer :

$CH_3HSiCl_2$, $H_2SiCl_2$, $(CH_3)_2HSiCl$, $HSiCL_3$

$(CH_3)_2SiCl_2$, $(CH_3)_3SiCl$, $CH_3SiCl_3$, $SiCl_4$

$(CH_3)_2Si(CH_2Cl)_2$, $(CH_3)_3SiCH_2Cl$, $CH_3Si(CH_2Cl)_3$

$(C_6H_5)_2SiCl_2$, $(C_6H_5)(CH_3)SiCl_2$, $C_6H_5SiCl_3$

$(CH_3)(CH_3CH_2)SiCl_2$, $(CH_3)(CH_2=CH)SiCl_2$

$(CH_3)_2(CH_2=CH)SiCl$, $(C_6H_5)_2(CH_2=CH)SiCl$

$(C_6H_5)(CH_2=CH)SiCl_2$, $CH_3(C_6H_5)(CH_2=CH)SiCl$.

Comme exemple de composés comportant au moins un groupement $NH_2$ ou NH et utilisables pour la synthèse des organopolysilazanes ci-dessus, on peut citer : l'ammoniac, la méthylamine, la diméthylamine, l'éthylamine, la cyclopropylamine, l'hydrazine, la méthylhydrazine, l'éthylènediamine, la tétraméthylènediamine, l'hexaméthylènediamine, l'aniline, la méthylaniline, la diphénylamine, la toluidine, la guanidine, l'aminoguanidine, l'urée, l'hexaméthyldisilazane, le diphényltétramé thyldisilazane, le tétraphényldiméthyldisilazane, le tétraméthyldivinyldisilazane, le diméthyldiphényldivinyldisilazane et le tétraméthyldisilazane.

Les organopolysilazanes obtenus en fin de réaction englobent plus spécifiquement :

1 - les polymères linéaires répondant aux formules :

$H_2N(R_2SiNH)_pSiR_2NH_2$ (II)

et

$R_3SiNH(R_2SiNH)_{p'}$ (III)

dans lesquelles R a la signification donnée pour la formule (I) ; p et p′ sont des nombres entiers pouvant être compris entre 1 et 1000 généralement entre 3 et 300.

Les polymères de formule (II) peuvent être préparés par mise en contact de diorganodichlorosilanes avec de l'ammoniac, et ceux de formule (III) par réaction d'ammoniac sur un triorganochlorosilane ou un mélange de diorganodichlorosilane et de triorganochlorosilane (voir brevet français FR - A. 1.086.932, brevet américain US - A 2.564.674).

De façon générale, la réaction d'organohalogénosilane sur une organoamine est décrite dans les brevets américains US-A 3.853.567 et 3.892.583 et la réaction d'organohalogénosilane sur un disilazane est décrite dans le brevet belge BE-A 888.787.

2 - les polymères cycliques répondant à la formule :

$(R_2SiNH)_n$ (IV)

dans laquelle n est compris entre 3 et 10, généralement n = 3,4 et R a la signification donnée pour la formule (I) ci-dessus. Ils sont décrits notamment dans le brevet britannique GB-A.881.178.

3 - les polymères résineux formés de motifs choisis parmi ceux de formule $R_3SiNH_{0,5}$, $R_2SiNH$, $RSiNH_{1,5}$, $Si(NH)_2$.

Ils sont avantageusement préparés par mise en contact des organochlorosilanes correspondant ou des mélanges de ces silanes, avec de l'ammoniac, de préférence en milieu solvant organique (voir brevets français FR-A 1.379.243, FR-A 1.392.853 et FR-A 1.393.728).

Les organopoly(disilyl)silazanes de départ susceptibles d'être réticulés selon un procédé conforme à l'invention, sont également des produits bien connus en soi et aisés à préparer. Ile peuvent être notamment préparés par action : (a) d'un composé organique ou organosilylé comportant au moins un groupement $NH_2$ ou NH comme par exemple l'ammoniac, les amines primaires ou secondaires, les silylamines, les amides, les hydrazines et les hydrazides, etc..., sur (b) au moins un organohalogénodisilane de formule :

$R_bX_{3-b}Si\,Si\,R_cX_{3-c}$ (V)

dans laquelle les radicaux R identiques ou différents ont la même signification que ci-dessus et b est égal à 0,1, 2 ou 3 et c est égal à 0, 1 ou 2, et X est un halogène, généralement le chlore.

Comme exemple de composés de formule (V) on peut citer :

$(CH_3)_2ClSiSi(CH_3)_2Cl$, $(CH_3)_2ClSiSiCH_3Cl_2$

$CH_3Cl_2SiSiCH_3Cl_2$

Comme exemples de composés comportant au moins un groupement $NH_2$ et NH utilisables pour la synthèse des poly(disilyl)silazanes, on peut citer les mêmes composés que ceux cités ci-dessus pour l'aminolyse des organohalogénomonosilanes.

De manière générale la réaction d'halogénodisilane, en présence éventuellement d'halogenosilane, sur l'ammoniac est décrite dans le brevet européen EP-A 75826. La réaction d'halogénodisilane sur un disilazane est décrite dans le brevet français FR-A 2.497.812.

Enfin, comme décrit dans le brevet EP-A 75826, il est possible de préparer des organopoly (disilyl) silazanes-silazanes par réaction de dérivés aminés cités précédemment sur des mélanges de produits halogénés de formule (I) et (V) ci-dessus.

Les polysilazanes de départ préparés à partir d'ammoniac sont généralement appelés ammonolysats et les polysilazanes de départ préparés à partir d'un composé aminé comme indiqué ci-dessus sont appelés aminolysats qui incluent donc les ammonolysats.

Bien entendu, il est également possible d'utiliser à titre de polysilazanes de départ des polysilazanes qui, issus des réactions d'aminolyse décrites ci-dessus, ont subi en outre des traitements catalytiques bien connus destinés à provoquer, suivant la nature de l'aminolysat, une polymérisation et/ou une copolymérisation et/ou un réarrangement des molécules, et ceci dans le but d'augmenter encore leur poids moléculaire, mais tout en gardant aux polysilazanes obtenus leur caractère fusible et soluble dans les solvants organiques.

Les conditions de mise en oeuvre de tels traitements catalytiques sont décrites notamment dans les documents suivants, tous cités à titre de références non limitatives : JP-A-77/160446, US-A-3.007.886, US-A-3.187.030 et FR-A-2.577.933.

Il est également possible d'utiliser à titre de polysilazanes de départ des copolymères silanes-silazanes obtenus par polycondensation, en milieu solvant et en présence d'un métal alcalin, notamment le sodium, entre des silanes chlorés et des disilazanes chlorés, comme décrit dans la demande de brevet français déposée sous le n° 87.08091, ou bien encore des polycarbosilazanes obtenus par thermolyse, de préférence opérée sous atmosphère inerte et à une température comprise entre 250 °C et 550 °C, des copolymères ci-dessus.

De préférence, on opérera sur des polysilazanes de départ présentant par molécule au moins un groupement ≡ Si-NH-.

Les composés comprenant au moins deux groupements fonctionnels du type -N=C=O qui peuvent être utilisés pour la réticulation de polysilazanes tels qui notamment définis ci-dessus, sont également des produits bien connus dans l'état de l'art puisque rentrant dans la classe générale des polyisocyanates.

Plus le composé comprendra de groupements isocyanates, et plus la composition polysilazane obtenue en fin de réaction sera réticulée, étant par ailleurs entendu, comme déjà indiqué, que ledit composé doit contenir à l'origine au moins deux groupements isocyanates.

Sans vouloir limiter l'invention à une quelconque théorie, il est probable que les mécanismes de réticulation mis en jeu lors de la mise en contact polysilazane / polyisocyanate soient les suivants (dans l'équation donnée ci-dessous, ≡ Si-NR-Si ≡ symbolise le polysilazane de départ, et O=C=N∿∿N=C=O le composé présentant au moins deux groupements isocyanates):

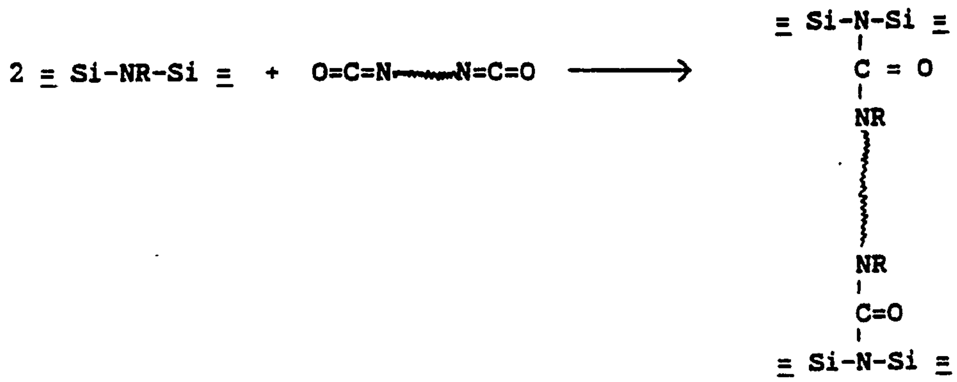

Le pontage entre les molécules de polysilazane est donc ainsi assuré par le composé polyisocyanate au travers de ces divers groupements fonctionnels isocyanates.

Parmi les polyisocyanates susceptibles d'être utilisés dans un procédé de réticulation conforme à l'invention, les diisocyanates conviennent particulièrement bien. A titre d'exemples de diisocyanates, on peut citer notamment (entre parenthèses, on a indiqué le nom d'usage du produit) :

* 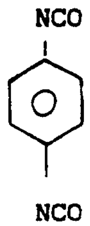 (PPDI)

* 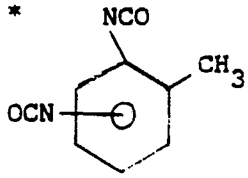 (TDI)

* 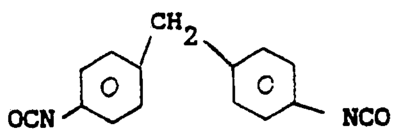 (MDI)

* 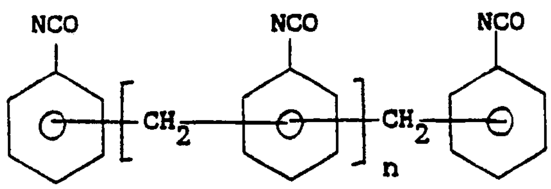 (PMDI

* 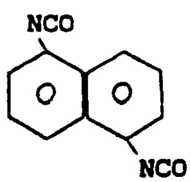 (NDI)

* 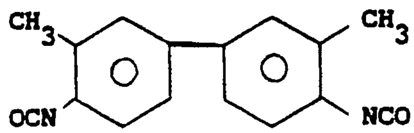 (TODI)

* 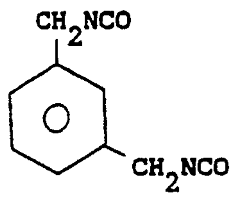 (XDI)

* $OCN(CH_2)_6\ NCO$ (HDI)

* $OCN(CH_2)_2\ NCO$ (DDI)

* 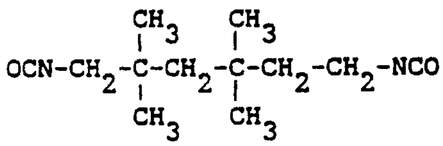 (TMDI)

* 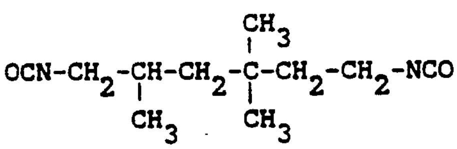 (TMDI)

* 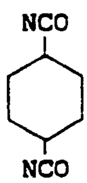 (CHDI)

* 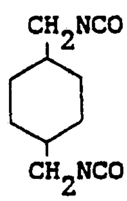 (BDI)

* 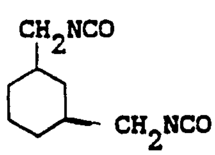 ($H_6XDI$)

* 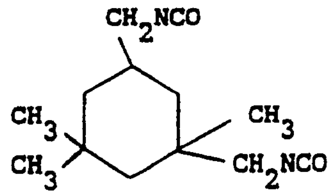 (IPDI)

* 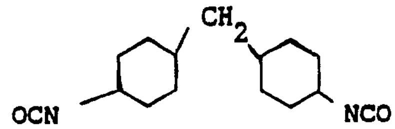 ($H_{12}MDI$)

La mise en contact entre le polysilazane de départ et le composé polyisocyanate peut se faire selon tout moyen connu en soi.

Le composé polyisocyanate peut se présenter sous la forme d'un liquide ou d'un gaz.

Par ailleurs, par quantité efficace d'un composé polyisocyanate tel que notamment défini ci-dessus, on entend une quantité suffisante pour réticuler convenablement le polysilazane et lui assurer ainsi un caractère substantiellement infusible et insoluble dans la plupart des solvants organiques usuels (pentane, hexane toluène, benzène...).

La température à laquelle est menée le traitement, et la durée de ce dernier, peuvent varier dans une large mesure et dépendent de la nature du polysilazane à durcir, ainsi que de la quantité de composé polyisocyanate mise en jeu. D'une manière générale, la durée est liée à la température du traitement : plus cette température est élevée et plus la durée du traitement peut être raccourcie, l'important étant d'aboutir dans tous les cas en fin de traitement à un état substantiellement infusible et insoluble.

D'une manière pratique, cette température est généralement comprise entre l'ambiante et la température de ramollissement du polysilazane à durcir ; elle est de préférence comprise entre 50 °C et une température légèrement inférieure à celle correspondant au point de ramollissement du polysilazane à durcir.

La durée du traitement n'étant pas critique, elle peut varier de quelques minutes à plusieurs heures, selon les températures mises en jeu.

Selon une première variante, préférée, de mise en oeuvre du procédé de réticulation selon l'invention, et convenant plus particulièrement pour la préparation ultérieure de fibres ou de couches minces réticulées, le polysilazane de départ est tout d'abord mis à la forme d'article désirée puis mis en contact avec le composé polyisocyanate destiné à l'imprégner : le composé polyisocyanate peut alors se présenter sous la forme d'un liquide ou d'un gaz, mais de préférence sous la forme d'un gaz.

Dans ce dernier cas, le composé polyisocyanate peut être utilisé pur, ou bien encore dilué dans un gaz inerte, tel qu'un gaz d'argon (ou tout autre gaz rare) ou d'azote par exemple.

Dans ce cas toujours, on opère généralement à pression atmosphérique, bien que des pressions inférieures ou supérieures ne soient bien évidemment pas exclues ; en outre la mise en contact entre le polysilazane et le composé polyisoccyanate peut être statique ou dynamique, c'est à dire réalisée sous balayage.

Selon une seconde variante de mise en oeuvre du procédé de réticulation selon l'invention, l'adjonction du composé polyisocyanate au polysilazane de départ peut se faire par mélange direct, en masse ou en milieu solvant organique, des deux composés.

Cette seconde variante n'offre un intérêt réel que dans la mesure où, bien entendu, le composé polyisocyanate utilisé est, à température ambiante, substantiellement inactif vis à vis du polysilazane de départ, c'est à dire que sa mise en contact avec le polysilazane n'engendre chez ce dernier que peu ou pas de transformations physicochimiques notables, notamment au niveau de son point de fusion ou de ramollissement. Le caractère substantiellement stable de la composition ainsi obtenue permet alors de ne pas perturber la mise en forme ultérieure du polysilazane, notamment lors d'une extrusion; plus précisément, les compositions ainsi obtenues peuvent ensuite être mises en forme selon les configurations les plus diverses telle que filaments, fibres, pellicules, revêtements de support, articles moulés ou autres, puis réticulées, la réticulation étant alors initiée par chauffage, notamment à la sortie d'une filière d'extrusion. Comme déjà indiqué, de telles compositions se prêtent alors avantageusement à la mise sous forme de fibres pour l'obtention, après réticulation et pyrolyse, de fibres céramiques. Elles peuvent en outre servir de matrice pour des fibres céramiques réalisées notamment en SiC, $SiO_2$, $Si_3N_4$, $B_4C$, etc... Plus simplement

encore, elles peuvent aussi être utilisées à la préparation de poudres céramiques.

Il va bien entendu de soi que les polysilazanes de départ destinés à être réticulés peuvent par ailleurs contenir des charges, de préférence choisies parmi $SiO_2$, $Si_3N_4$, SiC, BN, $B_2O_3$, $B_4C$, AlN, $Al_2O_3$, $Al_4C_3$, TiN, $TiO_2$, $ZrO_2$, ZrC, $VO_2$, etc...En outre, si besoin est pour une application donnée, leur viscosité peut être ajustée classiquement par ajout d'un solvant organique compatible avec le polysilazane considéré, comme par exemple du benzène, du toluène, de l'hexane, du cyclohexane, de l'éther isopropylique, de l'éther éthylique, du dichlorométhane ou du chlorobenzène.

A l'issue du traitement de réticulation selon l'invention, on récupère un polysilazane, éventuellement mis en forme, infusible et insoluble dans la plupart des solvants organiques usuels, notamment dans l'hexane.

Les polysilazanes ainsi durcies peuvent alors subir, de manière classique et connue, des traitements thermiques (pyrolyses) destinés à les transformer en des céramiques à base de SiC, $Si_3N_4$ ou leurs mélanges.

Plus particulièrement, les supports recouverts ou imprégnés du polysilazane durci, ou les fibres en polysilazane durci, peuvent subir immédiatement ou ultérieurement un pyrolyse menée sous vide ou sous pression ou sous atmosphère inerte ou réactive (par exemple $HN_3$) jusqu'à obtenir une céramisation totale.

Des exemples concrets, mais non limitatifs, illustrant l'invention dans ses divers aspects, vont maintenant être donnés.

## EXEMPLE 1

Un polysilazane de départ est tout d'abord prépare de la manière suivante :

dans un réacteur de trois litres double enveloppe muni d'une agitation mécanique, d'un tube d'entrée des gaz et d'un condenseur, on effectue une coammonolyse, en présence de 1,1 litre d'éther isopropylique, d'un mélange de $CH_3SiCl_3$ (0,85 mole) et de $(CH_3)_2SiCl_2$ (0,59 mole). Ce mélange dans l'éther isopropylique est refroidi à 3 °C et est maintenu à cette température pendant l'introduction de $NH_3$ gazeux. Le débit d'introduction de $NH_3$ est d'environ 6 ml/s et l'addition a lieu en 6 heures. En fin d'essai, on filtre le chlorure d'ammonium formé sur verre fritté (diamètre moyen des pores : 10 $\mu$m) et on récupère une solution limpide de polysilazane. Cette solution est ensuite concentrée puis traitée avec de l'acide triflique selon des modalités pratiques définies dans la demande de brevet français 2 577 933.

La température de ramollissement du polysilazane polymérisé contenu dans cette solution est alors de 130 °C (mesurée au banc KOFFLER).

On ajoute alors à la solution ainsi préparée 3 % en poids d'hexamethylènediisocyanate (HDI).

On porte ensuite le mélange à 70 °C pendant 5 heures.

La température de ramollissement du polysilazane récupéré après traitement est alors supérieure à 260 °C, c'est à ddire que ce polysilazane est infusible.

Ce polysilazane est en outre insoluble dans l'hexane.

## Example 2

Le polysilazane polymérisé obtenu aprés séchage de la solution telle que préparée selon l'exemple 1 est filé par extrusion sous forme de fibres (diamètre moyen : 13 $\mu$) puis est traité par de l'azote gazeux qui a été préalablement saturé, à température ambiante, en HDI.

L'évolution de la température de ramollissement (Tr) du polysilazane au cours du traitement est alors la suivante :

4H00 à 70 °C : Tr = 130 °C
suivi de 12H00 à 70 °C : Tr = 145 °C
suivi de 6H00 à 90 °C : Tr = 150 °C
suivi de 1H00 à 100 °C : Tr = 150 °C
suivi de 48H00 à 20 °C : Tr = 170 °C
suivi de 10H00 à 100 °C : Tr = 185 °C
suivi de 12H00 à 125 °C : Tr = 200 °C
suivi de 10H00 à 135 °C : Tr > 260 °C

Le produit issue de la dernière étape du traitement est infusible (Tr > 260 °C), et insoluble, notamment dans l'hexane, et sa teneur en poids en oxygène est de 1,7 %.

Exemple 3

On répète l'exemple 2, mais en utilisant cette fois de l'azote gazeux qui a été préalablement saturé en HDI à la même température que la température du traitement.

L'évolution de la température de ramollissement (Tr) du polysilazane au cours du traitement est alors la suivante :
5H30 à 60° C : Tr = 200° C
suivi de 12H00 à 60° C : Tr = 200° C
suivi de 6HOO à 90° C : Tr > 260° C.

Le produit issu de la dernière étape du traitement est infusible (Tr > 260° C), et insoluble, notamment dans l'hexane.

**Revendications**

1/ Procédé de réticulation d'un polysilazane, caractérisé par le fait qu'il consiste à mettre en contact ledit polysilazane avec une quantité efficace d'au moins un composé comprenant au moins deux groupements fonctionnels du type -N=C=O.

2/ Procédé selon la revendication 1, caractérisé en ce que ledit polysilazane comporte par molécule au moins un groupement ≡ Si-NH-.

3/ Procédé selon l'une quelconque des revendications précédentes caractérisé en ce que ledit composé est un diisocyanate.

4/ Procédé selon l'une quelconque des revendications précédentes caractérisé en ce que ladite mise en contact se fait à une température comprise entre la température ambiante et la température de ramollissement du polysilazane.

5/ Procédé selon la revendication 4 caractérisé en ce que ladite température est comprise entre 50° C et une température légèrement inférieure à la température de ramollissement du polysilazane.

6/ Procédé selon l'une quelconque des revendications précédentes caractérisé en ce que ledit composé est sous forme gazeuse.

7/ Procédé selon l'une quelconque des revendications précédentes caractérisé en ce que, avant ladite mise en contact, l'on met ledit polysilazane à une forme d'article désirée, telle que notamment fibre ou couche mince.

8/ Procédé selon l'une quelconque des revendications 1 à 6 caractérisé en ce que ladite mise en contact se fait par mélange direct, en masse ou en milieu solvant organique, dudit polysilazane et dudit composé.

9/ Procédé de préparation d'un produit céramique à base de SiC et/ou $Si_3N_4$ caractérisé par le fait qu'il consiste à pyrolyser un polysilazane réticulé selon un procédé conforme à l'une quelconque des revendications 1 à 8.

Office européen des brevets

# RAPPORT DE RECHERCHE EUROPEENNE

Numero de la demande

EP 89 40 3497

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-1 520 270 (MONSANTO)<br>* Revendications 1,4,5; page 3, paragraphe 1; page 13, paragraphe 2 *<br>--- | 1 | C 08 G 77/62<br>C 08 J 3/24<br>C 04 B 35/00<br>C 04 B 35/58 |
| A | US-A-4 693 914 (P. FOLEY)<br>* Revendications 1,2 *<br>--- | 1 | |
| A | FR-A-2 190 764 (BAYER)<br>* Revendications 1-5; page 6, lignes 5-25 *<br>----- | 1 | |

DOMAINES TECHNIQUES RECHERCHES (Int. Cl.5)

C 08 G
C 08 J
C 04 B

Le présent rapport a été établi pour toutes les revendications

| Lieu de la recherche | Date d'achèvement de la recherche | Examinateur |
|---|---|---|
| LA HAYE | 10-05-1990 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)